(19) Europäisches Patentamt
European Patent Office
Office européen des brevets

(11) Veröffentlichungsnummer: **0 292 904 B1**

(12) **EUROPÄISCHE PATENTSCHRIFT**

(45) Veröffentlichungstag der Patentschrift: **12.02.92**

(51) Int. Cl.5: **C09B 62/51**, D06P 1/384

(21) Anmeldenummer: **88108197.0**

(22) Anmeldetag: **21.05.88**

Die Akte enthält technische Angaben, die nach dem Eingang der Anmeldung eingereicht wurden und die nicht in dieser Patentschrift enthalten sind.

# (54) Wasserlösliche Naphthyl-azo-pyrazolon-Verbindungen, Verfahren zu ihrer Herstellung und ihre Verwendung als Farbstoffe.

(30) Priorität: **26.05.87 DE 3717667**

(43) Veröffentlichungstag der Anmeldung:
**30.11.88 Patentblatt 88/48**

(45) Bekanntmachung des Hinweises auf die Patenterteilung:
**12.02.92 Patentblatt 92/07**

(84) Benannte Vertragsstaaten:
**BE CH DE FR GB IT LI**

(56) Entgegenhaltungen:
**DE-A- 1 804 524**
**FR-A- 2 022 116**
**FR-A- 2 110 226**
**US-A- 4 036 825**

**S. FUJIOKA, S.ABETA, Dyes and Pigments 3, 281 (1982)**

(73) Patentinhaber: **HOECHST AKTIENGESELLSCHAFT**
**Postfach 80 03 20**
**W-6230 Frankfurt am Main 80(DE)**

(72) Erfinder: **Tappe, Horst, Dr.**
**Ringstrasse 9**
**W-6057 Dietzenbach(DE)**
Erfinder: **Oehme, Dieter**
**Potsdamer Strasse 18**
**W-6093 Flörsheim am Main(DE)**
Erfinder: **Schläfer, Ludwig, Dr.**
**Königsberger Strasse 40**
**W-6233 Kelkheim (Taunus)(DE)**
Erfinder: **Russ, Werner Hubert, Dr.**
**Berliner Strasse 10**
**W-6238 Hofheim am Taunus(DE)**

EP 0 292 904 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem Gebiet der faserreaktiven Azofarbstoffe.

In der GB-B-1 268 699 sind Monoazoverbindungen mit einer 1-Phenyl-pyrazol-5-on-Kupplungskomponente beschrieben; sie enthalten eine oder zwei β-Phosphatoethylsulfonyl-Gruppen als faserreaktive(r) Rest(e) an den 1-Phenyl-Rest der Kupplungskomponente oder an den Benzolrest der Diazokomponente oder an beide gebunden. Diese bekannten, als faserreaktive Farbstoffe verwendbaren Monoazoverbindungen besitzen jedoch ein nur geringes Ziehvermögen und können nach einem der technisch wichtigsten Färbeverfahren, nämlich dem Ausziehverfahren aus langer Flotte, nicht eingesetzt werden.

Des weiteren sind aus der GB-B-1 290 505 Monoazoverbindungen mit einer 1-Phenyl-pyrazolon-5-on-Kupplungskomponente bekannt, deren 1-Phenyl-Rest durch eine faserreaktive β-Sulfatoethylsulfonyl-, β-Thiosulfatoethylsulfonyl- oder Vinylsulfonyl-Gruppe substituiert ist. Diese bekannten Monoazofarbstoffe besitzen jedoch ein Fixiervermögen, das bei den heutigen Anforderungen an faserreaktive Farbstoffe noch verbesserungswürdig erschien und technisch nicht mehr vollauf befriedigt.

Desweiteren werden in der französischen Patentanmeldungs-Veröffentlichung Nr. 2 110 226 Monoazofarbstoffe mit einer Pyrazol-5-on-Kupplungskomponente, die in 3-Stellung durch einen Phenylrest substituiert ist, beschrieben; diese bekannten Farbstoffe können eine oder zwei faserreaktive Gruppen der Vinylsulfonreihe besitzen. Monoazofarbstoffe ähnlicher Struktur, jedoch mit einer 5-Amino-3-methyl-pyrazol-Kupplungskomponente, sind aus der US-Patentschrift 4 036 825 bekannt.

Mit der vorliegenden Erfindung wurden nunmehr Monoazoverbindungen entsprechend der allgemeinen Formel (1)

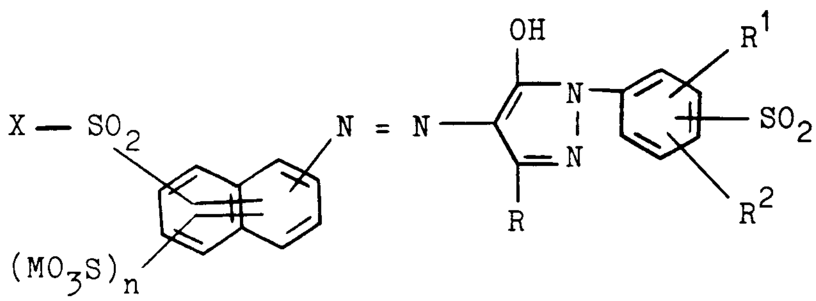

(1)

gefunden, die verbesserte faserreaktive Farbstoffeigenschaften besitzen.

In Formel (1) bedeuten:

M ist ein Wasserstoffatom oder ein Alkalimetall, wie Natrium, Kalium oder Lithium;
n ist die Zahl Null oder 1 (wobei im Falle n = Null diese Gruppe für ein Wasserstoffatom steht);
$R^1$ ist Wasserstoff, Methyl, Ethyl, Methoxy, Ethoxy, Chlor, Brom, Carboxy oder Sulfo und
$R^2$ ist Wasserstoff, Methyl, Ethyl, Methoxy, Ethoxy, Chlor oder Brom,

wobei $R^1$ und $R^2$ zueinander gleiche oder voneinander verschiedene Bedeutungen besitzen können;

R ist Carboxy oder Carbalkoxy von 2 bis 5 C-Atomen, wie Carbethoxy und Carbomethoxy;
X ist ein β-Thiosulfatoethyl-Gruppe oder bevorzugt eine β-Sulfatoethyl-Gruppe oder
X ist die Vinylgruppe, wobei jedoch n zwingend für die Zahl 1 steht;
Y ist eine β-Thiosulfatoethyl-Gruppe oder bevorzugt eine β-Sulfatoethyl-Gruppe oder
Y ist die Vinylgruppe, wobei jedoch n zwingend für die Zahl 1 steht.

Die Gruppen $-SO_2-X$ und $-SO_2-Y$ haben zueinander gleiche oder voneinander verschiedene Bedeutungen. Bevorzugt steht die Azogruppe in 2-Stellung an den Naphthalinring gebunden, und die Gruppe $-SO_2-X$ ist an den Naphthalinkern bevorzugt in 4- oder 8-Stellung gebunden. Die Gruppe $-SO_2-Y$ befindet sich an dem Benzolkern bevorzugt in meta- oder para-Stellung zum $N^1$-Atom des Pyrazolons gebunden.

Bevorzugt sind in den Verbindungen (1) die Formelreste X und Y beide gleichzeitig eine β-Sulfatoethyl-Gruppe. Bevorzugt sind weiterhin Verbindungen der Formel (1) mit $R^1$ und $R^2$ jedes gleich Wasserstoff.

Bevorzugt sind ebenfalls Verbindungen der allgemeinen Formel (1), in welcher $R^1$ ein Wasserstoffatom oder eine Methyl- oder Methoxygruppe und $R^2$ ein Wasserstoffatom oder eine Methoxygruppe bedeutet.

Bevorzugt sind insbesondere Azoverbindungen entsprechend der allgemeinen Formel (1a)

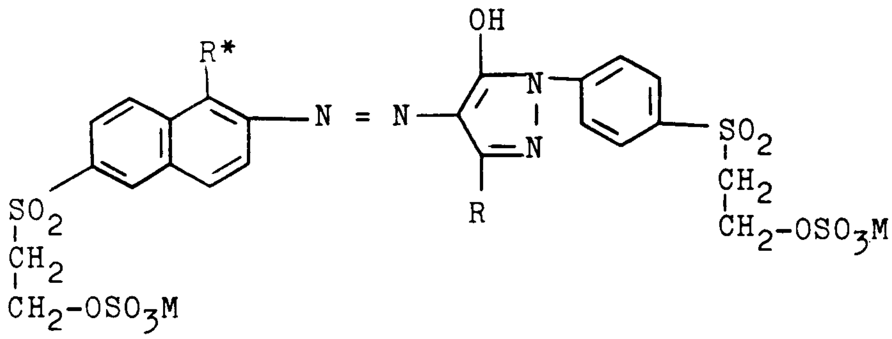

(1a)

in welcher R* ein Wasserstoffatom oder eine Sulfogruppe ist und M und R die obengenannten, insbesondere bevorzugten Bedeutungen haben, bevorzugt hierbei R die Carbethoxygruppe und R* die Sulfogruppe oder R die Carboxygruppe und R* ein Wasserstoffatom ist.

In den vorstehenden und nachstehenden Angaben sind Sulfogruppen Gruppen entsprechend der allgemeinen Formel $-SO_3M$ , Carboxygruppen Gruppen entsprechend der allgemeinen Formel -COOM , Thiosulfatogruppen Gruppen entsprechend der allgemeinen Formel $-S-SO_3M$ und Sulfatogruppen Gruppen entsprechend der allgemeinen Formel $-OSO_3M$ , wobei M eine der obengenannten Bedeutungen besitzt.

Die erfindungsgemäßen Monoazoverbindungen können in Form ihrer Säureverbindungen und in Form ihrer Salze vorliegen; bevorzugt sind sie in Form der Alkalisalze und finden bevorzugt in Form dieser Salze Verwendung zum Färben (einschließlich Bedrucken) von hydroxy- und/oder carbonamidgruppenhaltigen Materialien, insbesondere Fasermaterialien.

Die vorliegende Erfindung betrifft weiterhin Verfahren zur Herstellung der neuen Verbindungen der allgemeinen Formel (1). Sie können erfindungsgemäß hergestellt werden, indem man ein Diazoniumsalz einer aromatischen Aminoverbindung entsprechend der allgemeinen Formel (2)

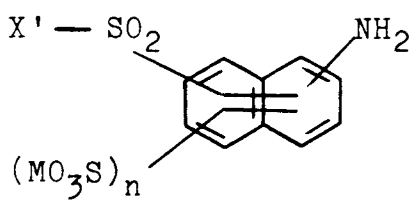

(2)

in welcher M und n die obengenannten Bedeutungen haben und X′ eine der Bedeutungen von X besitzt oder für die β-Hydroxyethyl-Gruppe steht, mit einer Verbindung entsprechend der allgemeinen Formel (3)

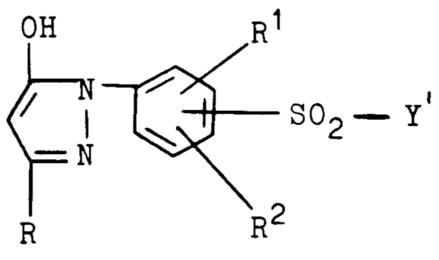

(3)

in welcher R, $R^1$ und $R^2$ die obengenannten Bedeutungen haben und Y′ eine der Bedeutungen von Y besitzt oder für die Hydroxyethyl-Gruppe steht, kuppelt und im Falle, daß X′ oder Y′ oder beide eine β-Hydroxyethyl-Gruppe darstellen, die erhaltene Monoazoverbindung mittels eines üblichen Sulfatisierungsmittels, wie beispielsweise 95 bis 100 %ige Schwefelsäure, Schwefeltrioxid enthaltende Schwefelsäure oder Chlorsulfonsäure, beispielsweise bei einer Temperatur zwischen 0 und 25° C, in die Verbindung (1) mit der entsprechenden β-Sulfatoethylsulfonyl-Gruppe überführt.

Die an sich bekannten und als Ausgangsverbindungen dienenden Pyrazolonverbindungen der allgemeinen Formel (3) können vorteilhaft auch so hergestellt werden, daß man ein Diazoniumsalz eines aromatischen Amins der allgemeinen Formel (4)

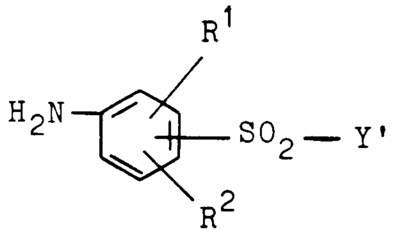

(4)

in welcher $R^1$, $R^2$ und Y′ die obengenannten Bedeutungen haben, in zweifach molarer Menge mit einem Acetylbernsteinsäure-dialkylester mit Alkylgruppen von jeweils 1 bis 4 C-Atomen, bevorzugt mit jeweils 1 oder 2 C-Atomen, umsetzt, indem man den Acetylbernsteinsäuredialkylester zu einer wäßrigen, auf einen pH-Wert von 4,5 bis 5,5 eingestellten Suspension oder Lösung der äquimolaren Menge eines Diazoniumsalzes des aromatischen Amins der allgemeinen Formel (4) bei einer Temperatur zwischen 5 und 25° C und bei einem pH-Wert zwischen 3,5 und 5,5, bevorzugt zwischen 4 und 5 hinzugibt und die Umsetzung nach einiger Zeit bei einem pH-Wert zwischen 6 und 7,5 und einer Temperatur zwischen 15 und 25° C weiter- und zu Ende führt. Bei dieser Verfahrensweise erfolgt zunächst Kupplung eines Mols des Diazoniumsalzes mit der Acetylbernsteinsäure und sodann Ringschluß zum Pyrazolon der allgemeinen Formel (3). Ist in der Ausgangsverbindung (4) die Gruppe Y′ eine β-Hydroxyethyl-Gruppe, so kann die Kupplung und der Ringschluß auch im alkalischen Bereich, so bei einem pH-Wert zwischen 6,5 und 9, durchgeführt werden.

Die Kupplungsreaktion einer Verbindung der allgemeinen Formel (3) mit dem Diazoniumsalz eines aromatischen Amins der allgemeinen Formel (2) erfolgt analog den üblichen und bekannten Verfahrensweisen, so beispielsweise in wäßrigem Medium bei einem pH-Wert zwischen 4 und 7,5, bevorzugt zwischen 4 und 7, und bei einer Temperatur zwischen 0 und 35° C, bevorzugt zwischen 10 und 25° C, wobei, sofern X und Y beide β-Hydroxyethyl-Gruppen sind, die Kupplung auch im schwach alkalischen Bereich, wie zwischen 7,5 und 9, durchgeführt werden kann.

Ausgangsverbindungen der allgemeinen Formel (2), die erfindungsgemäß als Diazokomponente dienen, sind beispielsweise die in den nachfolgenden Beispielen erwähnten Diazokomponenten, insbesondere beispielsweise 6-(β-Sulfatoethylsulfonyl)-2-amino-naphthalin, 8-(β-Sulfatoethylsulfonyl)-2-amino-naphthalin, 6-(β-Sulfatoethylsulfonyl)-1-sulfo-2-amino-naphthalin, 6-(β-Sulfatoethylsulfonyl)-8-sulfo-2-amino-naphthalin, 8-(β-Sulfatoethylsulfonyl)-6-sulfo-2-amino-naphthalin, 6-(β-Thiosulfatoethylsulfonyl)-2-amino-naphthalin, 6-(β-Thiosulfatoethylsulfonyl)-1-sulfo-2-amino-naphthalin, hiervon insbesondere 6-(β-Sulfatoethylsulfonyl)-2-amino-naphthalin, 8-(β-Sulfatoethylsulfonyl)-2-aminonaphthalin, 6-(β-Sulfatoethylsulfonyl)-1-sulfo-2-amino-naphthalin und 6-(β-Sulfatoethylsulfonyl)-8-sulfo-2-amino-naphthalin.

Pyrazolonverbindungen der allgemeinen Formel (3) sind beispielsweise die in den Beispielen erwähnten Kupplungskomponenten, insbesondere beispielsweise 1-[4′-(β-Sulfatoethylsulfonyl)-phenyl]-3-carbethoxy-pyrazol-5-on, 1-[4′-(β-Sulfatoethylsulfonyl)-phenyl]-3-carboxy-pyrazol-5-on, 1-[3′-(β-Sulfatoethylsulfonyl)-phenyl]-3-carbethoxy-pyrazol-5-on, 1-[4′-(β-Sulfatoethylsulfonyl)-phenyl]-3-carbomethoxy-pyrazol-5-on, 1-[2′-Methoxy-5′-(β-sulfatoethylsulfonyl)-phenyl]-3-carbethoxy-pyrazol-5-on, hiervon insbesondere 1-[4′-(β-Sulfatoethylsulfonyl)-phenyl]-3-carbethoxy-pyrazol-5-on, 1-[4′-(β-Sulfatoethylsulfonyl)-phenyl]-3-carboxy-pyrazol-5-on und 1-[4′-(β-Sulfatoethylsulfonyl)-phenyl]-3-carbomethoxy-pyrazol-5-on.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) - im nachfolgenden als Verbindungen (1) bezeichnet - haben faserreaktive Eigenschaften und besitzen wertvolle Farbstoffeigenschaften. Sie können deshalb zum Färben (einschließlich Bedrucken) von natürlichen, regenerierten oder synthetischen hydroxygruppenhaltigen und/oder carbonamidgruppenhaltigen Materialien, beispielsweise in Form von Flächengebilden, wie Papier und Leder oder von Polyamid oder Polyurethan, insbesondere aber von solchen Materialien in Faserform, wie Cellulosefasermaterialien, Seide, Wolle und synthetische Polyamid- und Polyurethanfasern, verwendet werden. Auch können die bei der Synthese der Verbindungen (1) anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Die Verbindungen (1) lassen sich, gemäß der erfindungsgemäßen Anwendung, auf den genannten Substraten, insbesondere auf den genannten Fasermaterialien, nach den für wasserlösliche, insbesondere faserreaktive, Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe-und Fixierweisen sind in der Literatur zahlreich beschrieben, wie beispielsweise in der DE-A-3 025 572.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen der Applikation und Fixierung von faserreaktiven Farbstoffen vorgehen.

Die erfindungsgemäßen Monoazoverbindungen zeichnen sich durch eine hohe Farbstärke und einen guten Farbaufbau aus; sie liefern demgemäß farbstarke Färbungen und Drucke von gelber bis oranger Nuance. Insbesondere ihre Färbungen und Drucke auf Cellulosefasermaterialien besitzen gute Gebrauchs- und Fabrikationsechtheiten, wie beispielsweise gute Licht-, Wasch-, Chlorbadewasser-, Abgas-, Bügel-, Plissier-, Dekatier-, Trockenreinigungs-, Reib-, Säure-, Alkali- und Überfärbeechtheiten sowie gute alkalische und saure Schweißechtheiten. Die Fixiergrade der erfindungsgemäßen Verbindungen sind sehr hoch, weswegen der nicht fixierte Anteil an der erfindungsgemäßen Verbindung nur gering ist und demgemäß beim Fertigstellen von Färbungen und Drucken nur wenig von dieser angewendeten Farbstoffverbindung mit dem Spül- oder Waschwasser ins Abwasser gelangt. Die erfindungsgemäßen Monoazoverbindungen liefern beim Druck scharfe Konturen mit einem klaren Weißfond; die Drucke und Färbungen flecken auf beiliegendem Material nicht ab bzw. bluten nicht aus und zeigen eine hohe Säurelagerbeständigkeit. Darüber hinaus sind die erfindungsgemäßen Verbindungen nicht phototrop.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden aus wäßriger Lösung der Alkalimetallsalze bestimmt.

Beispiel 1

Eine neutrale Lösung des Natriumsalzes von 28,1 Teilen 4-($\beta$-Sulfatoethylsulfonyl)-anilin und 5,0 Teilen Natriumnitrit in 100 Teilen Wasser gibt man unter kräftigem Rühren in ein Gemisch aus 100 Teilen Eis und 35 Teilen einer 30%igen wäßrigen Salzsäure. Man rührt noch eine Stunde nach und stellt die Suspension des Diazoniumsalzes mit Natriumcarbonat auf einen pH-Wert von 5 und gibt sodann langsam während 30 Minuten 22,8 Teile Acetylbernsteinsäurediethylester hinzu, wobei man die Reaktionstemperatur bei 10 bis 15 °C und den pH-Wert bei 4 hält. Man rührt noch etwa eine Stunde nach (bis kein Diazoniumsalz mehr nachweisbar ist), erhöht den pH-Wert auf 6 und rührt noch weitere 5 bis 7 Stunden bei diesem pH-Wert nach.

Zu der so bereiteten Lösung der Pyrazolon-Kupplungskomponente gibt man die auf üblichem Wege hergestellte Lösung des Diazoniumsalzes aus 41,1 Teilen 6-($\beta$-Sulfatoethylsulfonyl)-1-sulfo-2-naphthylamins in etwa 300 Teilen Wasser, stellt einen pH-Wert von 4 bis 5 ein und führt die Kupplungsreaktion innerhalb dieses pH-Bereiches zu Ende.

Nach beendeter Kupplungsreaktion klärt man den Ansatz mittels 10 Teilen Aktivkohle und anschließender Filtration. Aus dem Filtrat kann die synthetisierte Azoverbindung durch Aussalzen mittels Natriumchlorid oder Kaliumchlorid oder durch Eindampfen oder Sprühtrocknen isoliert werden. Man erhält das erfindungsgemäße Alkalimetallsalz der Verbindung der Formel

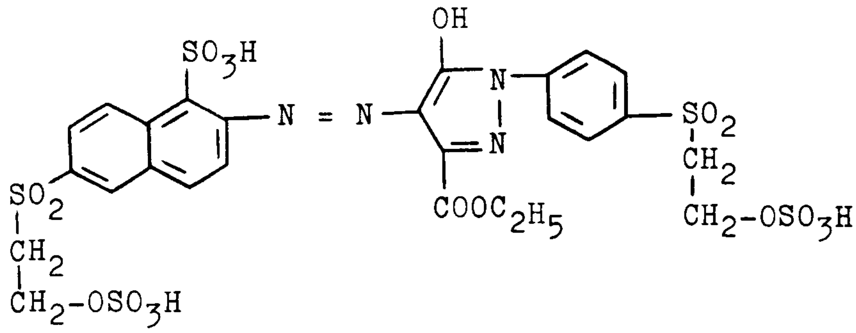

($\lambda_{max}$ = 433 nm)

in Form eines elektrolythaltigen Produktes. Diese erfindungsgemäße Monoazoverbindung besitzt sehr gute faserreaktive Farbstoffeigenschaften und liefert nach den üblichen Färbe- und Druckverfahren für faserreaktive Farbstoffe auf den in der Beschreibung genannten Materialien, wie insbesondere Cellulosefasermaterialien, gelbe Färbungen und Drucke in sehr guter Farbausbeute.

Die erfindungsgemäß erhältlichen Färbungen und Drucke zeichnen sich durch sehr gute Lichtechtheiten sowohl in trockenem Zustand als auch mit Trinkwasser oder mit einer alkalischen oder sauren Schweißlösung befeuchteten Zustand, desweiteren durch gute Waschechtheiten (wie bei der 60°C- und 95°C-Wäsche), durch eine gute Wasserechtheit, durch gute alkalische und saure Schweißechtheiten, durch gute alkalische und saure Überfärbeechtheiten sowie durch eine gute Säurelagerbeständigkeit aus.

Beispiel 2

Zur Herstellung einer erfindungsgemäßen Monoazoverbindung hydrolysiert man zunächst 24,8 Teile 4-(β-Hydroxyethylsulfonyl)-acetanilid durch zweistündiges Kochen in wäßriger, salzsaurer Lösung (50 Teile Wasser und 25 Teile konzentrierte Salzsäure), läßt sodann abkühlen, gibt 30 Teile Eis hinzu und diazotiert mittels 18,5 Teilen einer 40%igen wäßrigen Natriumnitritlösung. Man rührt die Diazoniumsalzsuspension noch eine Stunde nach, erhöht den pH-Wert auf 3 und gibt sodann 4 Teile Natriumbicarbonat und 22,7 Teile Acetylbernsteinsäurediethylester hinzu. Das Reaktionsgemisch wird noch 10 Stunden bei einer Temperatur von 10 bis 20°C und einem pH-Wert zwischen 3 und 4 gerührt, bis die Anwesenheit des Diazoniumsalzes nicht mehr nachweisbar ist, stellt es sodann auf einen pH-Wert von 11, erwärmt es auf 80°C und rührt bei dieser Temperatur und diesem pH noch eine Stunde nach. Der Ansatz wird sodann mit zwei Teilen Natriumdithionit entfärbt und anschließend filtriert. Das Filtrat wird mit 100 Teilen Eiswasser versetzt und mittels 46 Teilen einer 30%igen wäßrigen Salzsäure auf einen pH-Wert von 2,5 gestellt. Das ausgefallene, synthetisierte 1-[4'-(β-Hydroxyethylsulfonyl)-phenyl]-3-carboxy-pyrazol-5-on wird abgesaugt und getrocknet und sodann bei 15 bis 25°C in ein Gemisch aus 65 Teilen 100%iger Schwefelsäure und 10 Teile 50%igem Oleum eingetragen und verrührt, bis eine klare Lösung erhalten ist, die man auf 300 Teile Eis gibt und mit etwa 90 Teilen Calciumcarbonat auf einen pH-Wert von 4,5 einstellt, auf 80°C erwärmt, das ausgefallene Calciumsulfat absaugt und mit 200 Teilen heißem Wasser nachwäscht.

Waschwasser und Filtrat werden vereinigt und mit der Suspension des auf üblichem Wege hergestellten Diazoniumsalzes aus 33,1 Teilen 8-(β-Hydroxyethylsulfonyl)-2-naphthylamin in etwa 300 Teilen Wasser versetzt. Man führt die Kupplungsreaktion bei einer Temperatur zwischen 20 und 25°C und einem pH-Wert zwischen 4 und 5 aus.

Die erhaltene erfindungsgemäße Monoazoverbindung wird mit Natriumchlorid ausgesalzen. Man erhält sie als Natriumsalz in Form eines elektrolythaltigen (vorwiegend natriumchloridhaltigen) Produktes; sie besitzt, in Form der freien Säure geschrieben, die Formel

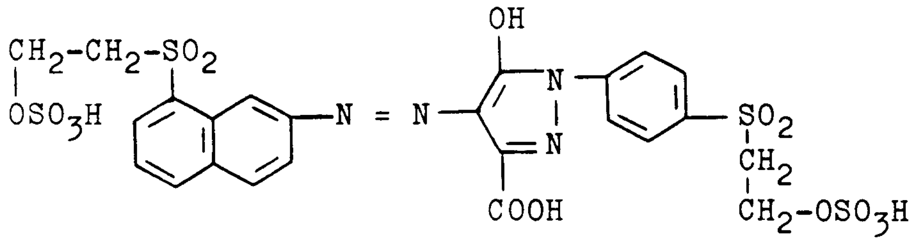

($\lambda_{max}$ = 445 nm)

und zeigt sehr gute faserreaktive Farbstoffeigenschaften; sie färbt die der Beschreibung genannten Fasermaterialien, wie insbesondere Cellulosefasermaterialien, nach den in der Technik üblichen Applikations- und Fixiermethoden für faserreaktive Farbstoffe in farbstarken, orangen Farbtönen. Die erfindungsgemäße Verbindung besitzt ein sehr hohes Fixiervermögen, und die mit ihr erhältlichen Färbungen und Drucke haben gute bis sehr gute Echtheitseigenschaften, wie beispielsweise solche, die für die erfindungsgemäße Monoazoverbindung des Beispieles 1 genannt werden.

Beispiel 3

Zur Herstellung einer erfindungsgemäßen Monoazoverbindung mit der β-Thiosulfatoethylsulfonyl-Gruppe stellt man eine Lösung von 69,8 Teilen der in Beispiel 2 beschriebenen Monoazoverbindung in 500 Teilen Wasser mittels einer wäßrigen Natriumhydroxidlösung bei einer Temperatur von 20° C auf einen pH-Wert von 11, rührt die entstandene Suspension noch 5 Minuten nach, gibt sodann 35 Teile Natriumthiosulfat hinzu, stellt den pH mittels Essigsäure auf einen Wert zwischen 5 und 6 ein, erwärmt den Reaktionsansatz auf 70° C und rührt noch 6 bis 8 Stunden innerhalb dieses pH-Bereiches bei 60-70° C nach. Anschließend wird das Reaktionsgemisch in üblicher Weise heiß geklärt und das Filtrat eingedampft oder sprühgetrocknet.

Man erhält ein elektrolytsalzhaltiges gelbbraunes Pulver mit dem erfindungsgemäßen Natriumsalz der Verbindung der Formel

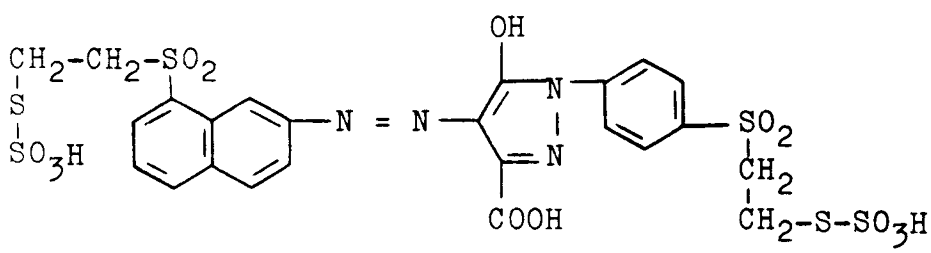

($\lambda_{max}$ = 449 nm).

Diese Verbindung besitzt ebenfalls sehr gute faserreaktive Farbstoffeigenschaften und liefert auf den in der Beschreibung genannten Fasermaterialien, insbesondere Cellulosefasermaterialien, nach den in der Technik üblichen Färbe- und Druckverfahren Färbungen und Drucke in farbstarken, rotstichig gelber Nuance mit den gleichen guten bis sehr guten Echtheitseigenschaften, wie sie für die erfindungsgemäße β-Sulfatoethylsulfonyl-Monoazoverbindung des Beispieles 2 beschrieben sind.

Beispiel 4

Man bereitet gemäß dem ersten Absatz von Beispiel 2 eine Lösung der Kupplungskomponente und vereinigt sie mit der Suspension des Diazoniumsalzes aus 41,1 Teilen 6-(β-Sulfatoethylsulfonyl)-1-sulfo-2-amino-naphthalin (gemäß Beispiel 1) und führt die Kupplungsreaktion bei einer Temperatur zwischen 10 und 20° C und einem pH-Wert zwischen 4 und 5 zu Ende. Die erfindungsgemäße Azoverbindung kann

durch Eindampfen oder Aussalzen in üblicher Weise aus der Syntheselösung als Alkalimetallsalz isoliert werden. Sie besitzt, in Form der freien Säure geschrieben, die Formel

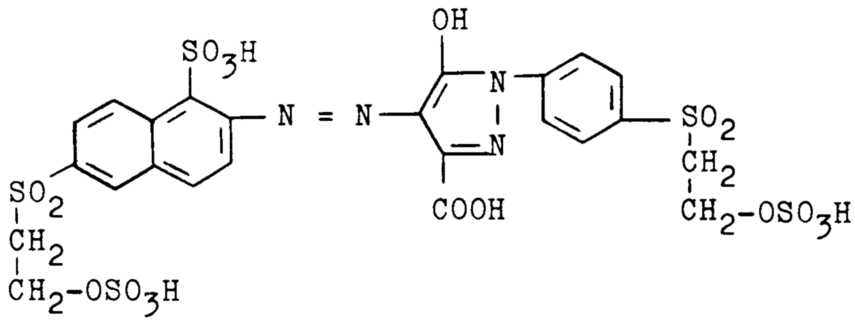

($\lambda_{max}$ = 417 nm) .

Diese erfindungsgemäße Monoazoverbindung besitzt sehr gute faserreaktive Farbstoffeigenschaften und liefert nach den üblichen Färbe- und Druckverfahren für faserreaktive Farbstoffe insbesondere auf Cellulosefasermaterialien gelbe Färbungen und Drucke in sehr guter Farbausbeute und den gleichen guten Echtheitseigenschaften, die auch für die erfindungsgemäße Azoverbindung des Beispieles 1 erwähnt sind.

Beispiel 5

Die Lösung der Kupplungskomponente gemäß dem ersten Absatz von Beispiel 2 wird mit der wäßrigen Lösung des Diazoniumsalzes aus 33,1 Teilen 6-($\beta$-Sulfatoethylsulfonyl)-2-amino-naphthalin versetzt. Man führt die Kupplung bei einem pH-Wert von 4 bis 5 und einer Temperatur zwischen 10 und 20 °C durch und isoliert nach Beendigung der Kupplungsreaktion die erfindungsgemäße Verbindung durch Aussalzen oder Eindampfen als Alkalimetallsalz. Sie besitzt, in Form der freien Säure geschrieben, die Formel

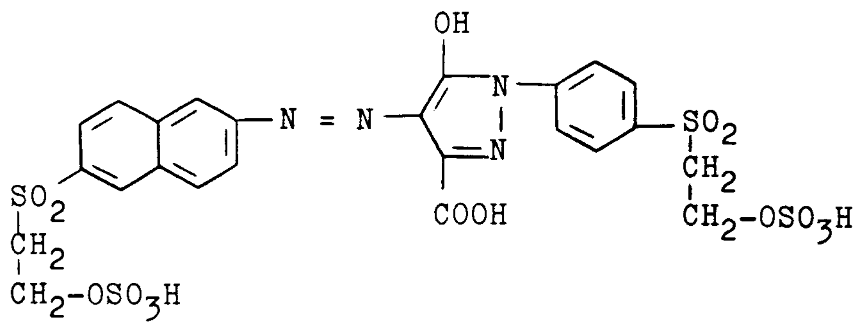

($\lambda_{max}$ = 445 nm) .

Diese erfindungsgemäße Monoazoverbindung besitzt sehr gute faserreaktive Farbstoffeigenschaften und liefert nach den üblichen Färbe- und Druckverfahren für faserreaktive Farbstoffe insbesondere auf Cellulosefasermaterialien gelbe Färbungen und Drucke in sehr guter Farbausbeute und den gleichen guten Echtheitseigenschaften, die auch für die erfindungsgemäße Azoverbindung des Beispieles 1 erwähnt sind.

Beispiele 6 bis 77

In den nachfolgenden Tabellenbeispielen sind weitere erfindungsgemäße Monoazoverbindungen mit Hilfe der Komponenten entsprechend einer allgemeinen Formel (A)

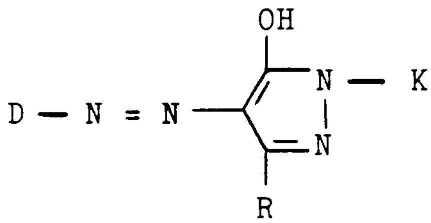

(A)

beschrieben. Sie lassen sich in erfindungsgemäßer Weise, beispielsweise nach einem der obigen Ausführungsbeispiele, mittels der aus dem jeweiligen Tabellenbeispiel in Verbindung mit Formel (A) ersichtlichen Komponenten, wie der Diazokomponente D-$NH_2$ und der Kupplungskomponente entsprechend der allgemeinen Formel (B)

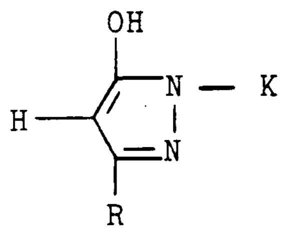

(B)

herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in den in dem jeweiligen Tabellenbeispiel für Färbungen auf Baumwolle angegebenen Farbtönen.

| Bsp. | Monoazoverbindung der Formel (A) Rest D | Rest R | Rest K | Farbton ($\lambda_{max}$=..nm) |
|---|---|---|---|---|
| 6 | 4-(ß-Sulfatoethyl-sulfonyl)-naphth-1-yl | Carboxy | 4'-(ß-Sulfato-ethylsulfonyl)-phenyl | orange |
| 7 | 5-(ß-Sulfatoethyl-sulfonyl)-naphth-1-yl | dito | dito | orange |
| 8 | 5-(ß-Sulfatoethyl-sulfonyl)-naphth-2-yl | dito | dito | gelb |
| 9 | 7-(ß-Sulfatoethyl-sulfonyl)-naphth-2-yl | dito | dito | gelb |
| 10 | 8-(ß-Sulfatoethyl-sulfonyl)-naphth-2-yl | dito | dito | gelb (446) |
| 11 | 4-(ß-Sulfatoethyl-sulfonyl)-naphth-1-yl | dito | 3'-(ß-Sufato-ethylsulfonyl)-phenyl | orange |
| 12 | 5-(ß-Sulfatoethyl-sulfonyl)-naphth-1-yl | dito | dito | orange (453) |
| 13 | 5-(ß-Sulfatoethyl-sulfonyl)-naphth-2-yl | dito | dito | gelb |
| 14 | 6-(ß-Sulfatoethyl-sulfonyl)-naphth-2-yl | dito | dito | gelb |
| 15 | 7-(ß-Sulfatoethyl-sulfonyl)-naphth-2-yl | dito | dito | gelb (444) |
| 16 | 8-(ß-Sulfatoethyl-sulfonyl)-naphth-2-yl | dito | dito | gelb (446) |
| 17 | 6-(ß-Sulfatoethyl-sulfonyl)-naphth-2-yl | dito | 2'-Methoxy-4'-(ß-sulfatoethyl-sulfonyl)-phenyl | rot-stichig gelb |
| 18 | 5-(ß-Sulfatoethyl-sulfonyl)-naphth-2-yl | dito | dito | gelb |
| 19 | 6-(ß-Sulfatoethyl-sulfonyl)-1-sulfo-naphth-2-yl | Carbo-propoxy | 4'-(ß-Sulfato-ethylsulfonyl)-phenyl | gelb (435) |
| 20 | dito | Carbo-methoxy | dito | gelb (433) |

| Bsp. | Monoazoverbindung der Formel (A) Rest D | Rest R | Rest K | Farbton ($\lambda_{max}$=..nm) |
|---|---|---|---|---|
| 21 | 6-(ß-Sulfatoethyl-sulfonyl)-1-sulfo-naphth-2-yl | Carbo-methoxy | 3'-(ß-Sulfato-ethylsulfonyl)-phenyl | gelb (415) |
| 22 | dito | Carb-ethoxy | dito | gelb (420) |
| 23 | dito | Carboxy | dito | gelb |
| 24 | dito | Carbo-propoxy | dito | gelb |
| 25 | dito | Carb-ethoxy | 3'-(ß-Thiosul-fatoethylsulfo-nyl)-phenyl | gelb |
| 26 | dito | dito | 4'-(ß-Thiosul-fatoethylsulfo-nyl)-phenyl | gelb |
| 27 | dito | dito | 4'-Vinylsulfo-nyl-phenyl | gelb (420) |
| 28 | dito | dito | 3'-Vinylsulfo-nyl-phenyl | gelb |
| 29 | 6-(ß-Thiosulfatoethyl-sulfonyl)-1-sulfo-naphth-2-yl | dito | dito | gelb |
| 30 | dito | dito | 4'-Vinylsulfo-nyl-phenyl | gelb |
| 31 | dito | dito | 4'-(ß-Thiosulfa-toethyl)-phenyl | gelb (431) |
| 32 | dito | Carbo-methoxy | dito | gelb |
| 33 | dito | Carboxy | dito | gelb |
| 34 | dito | dito | 3'-(ß-Thiosul-fatoethylsulfo-nyl)-phenyl | gelb |
| 35 | 6-Vinylsulfonyl-1-sulfo-naphth-2-yl | dito | 3'-Vinylsulfo-nyl-phenyl | gelb |
| 36 | dito | dito | 4'-Vinylsulfo-nyl-phenyl | gelb |
| 37 | dito | dito | 4'-(ß-Sulfato-ethylsulfonyl)-phenyl | gelb |

| Bsp. | Monoazoverbindung der Formel (A) Rest D | Rest R | Rest K | Farbton ($\lambda_{max}$=..nm) |
|---|---|---|---|---|
| 38 | 6-Vinylsulfonyl-1-sulfo-naphth-2-yl | Carboxy | 3'-(ß-Sulfatoethylsulfonyl)-phenyl | gelb |
| 39 | dito | dito | 4'-(ß-Thiosulfatoethylsulfonyl)-phenyl | gelb |
| 40 | 8-(ß-Sulfatoethylsulfonyl)-6-sulfo-naphth-2-yl | Carbethoxy | 4'-(ß-Sulfatoethylsulfonyl)-phenyl | gelb (438) |
| 41 | dito | Carbomethoxy | dito | gelb (437) |
| 42 | dito | Carboxy | dito | gelb (438) |
| 43 | dito | dito | 3'-(ß-Sulfatoethylsulfonyl)-phenyl | gelb |
| 44 | dito | Carbomethoxy | dito | gelb |
| 45 | dito | Carbethoxy | dito | gelb |
| 46 | 8-(ß-Thiosulfatoethylsulfonyl)-6-sulfo-naphth-2-yl | dito | 4'-(ß-Thiosulfatoethylsulfonyl)-phenyl | gelb (439) |
| 47 | 6-(ß-Sulfatoethylsulfonyl)-8-sulfo-naphth-2-yl | dito | dito | gelb (442) |
| 48 | dito | dito | 3'-(ß-Thiosulfatoethylsulfonyl)-phenyl | gelb |
| 49 | dito | dito | 3'-(ß-Sulfatoethylsulfonyl)-phenyl | gelb |
| 50 | dito | dito | 4'-(ß-Sulfatoethylsulfonyl)-phenyl | gelb (441) |
| 51 | dito | Carboxy | dito | gelb (440) |
| 52 | dito | Carbomethoxy | dito | gelb |

| Bsp. | Monoazoverbindung der Formel (A) Rest D | Rest R | Rest K | Farbton ($\lambda_{max}$=..nm) |
|---|---|---|---|---|
| 53 | 6-(ß-Thiosulfatoethylsulfonyl)-8-sulfo-naphth-2-yl | Carbomethoxy | 4'-(ß-Thiosulfatoethylsulfonyl)-phenyl | gelb |
| 54 | 6-Vinylsulfonyl-8-sulfo-naphth-2-yl | Carbethoxy | 4'-Vinylsulfonyl-phenyl | gelb |
| 55 | dito | dito | 3'-Vinylsulfonyl-phenyl | gelb |
| 56 | 5-Vinylsulfonyl-1-sulfo-naphth-2-yl | dito | dito | gelb (418) |
| 57 | dito | dito | 4'-Vinylsulfonyl-phenyl | gelb |
| 58 | 5-(ß-Thiosulfatoethylsulfonyl)-1-sulfo-naphth-2-yl | Carboxy | 4'-(ß-Thiosulfatoethylsulfonyl)-phenyl | gelb (435) |
| 59 | dito | Carbethoxy | 3'-(ß-Thiosulfatoethylsulfonyl)-phenyl | gelb |
| 60 | 5-(ß-Sulfatoethylsulfonyl)-1-sulfo-naphth-2-yl | dito | 4'-(ß-Sulfatoethylsulfonyl)-phenyl | gelb (433) |
| 61 | dito | Carbomethoxy | dito | gelb |
| 62 | dito | Carboxy | dito | gelb (430) |
| 63 | 7-(ß-Sulfatoethylsulfonyl)-5-sulfo-naphth-2-yl | Carbethoxy | dito | gelb |
| 64 | dito | Carbomethoxy | dito | gelb |
| 65 | dito | Carboxy | dito | gelb |
| 66 | dito | Carbethoxy | 3'-(ß-Sulfatoethylsulfonyl)-phenyl | gelb |
| 67 | 7-(ß-Thiosulfatoethylsulfonyl)-5-sulfo-naphth-2-yl | Carbethoxy | 4'-(ß-Thiosulfatoethylsulfonyl)-phenyl | gelb |

| Bsp. | Monoazoverbindung der Formel (A) Rest D | Rest R | Rest K | Farbton ($\lambda_{max}$=..nm) |
|---|---|---|---|---|
| 68 | 7-(ß-Thiosulfatoethyl-sulfonyl)-5-sulfo-naphth-2-yl | Carb-ethoxy | 3'-(ß-Thiosul-fatoethylsul-fonyl)-phenyl | gelb |
| 69 | 7-Vinylsulfonyl-5-sulfo-naphth-2-yl | Carboxy | 4'-Vinylsulfo-nyl-phenyl | gelb |
| 70 | 5-Vinylsulfonyl-7-sulfo-naphth-2-yl | Carb-ethoxy | dito | gelb |
| 71 | dito | dito | 3'-Vinylsulfo-nyl-phenyl | gelb |
| 72 | 5-(ß-Thiosulfato-ethylsulfonyl)-7-sulfo-naphth-2-yl | Carb-ethoxy | 4'-(ß-Thiosul-fatoethylsul-fonyl)-phenyl | gelb |
| 73 | dito | dito | 3'-(ß-Thiosul-fatoethylsul-fonyl)-phenyl | gelb |
| 74 | 5-(ß-Sulfatoethylsulfo-nyl)-7-sulfo-naphth-2-yl | dito | 4'-(ß-Sulfato-ethylsulfonyl)-phenyl | gelb |
| 75 | dito | Carboxy | dito | gelb |
| 76 | dito | Carbo-methoxy | dito | gelb |
| 77 | dito | dito | 3'-(ß-Sulfato-ethylsulfonyl)-phenyl | gelb |

## Patentansprüche

**1.** Eine wasserlösliche Monoazoverbindung entsprechend einer allgemeinen Formel (1)

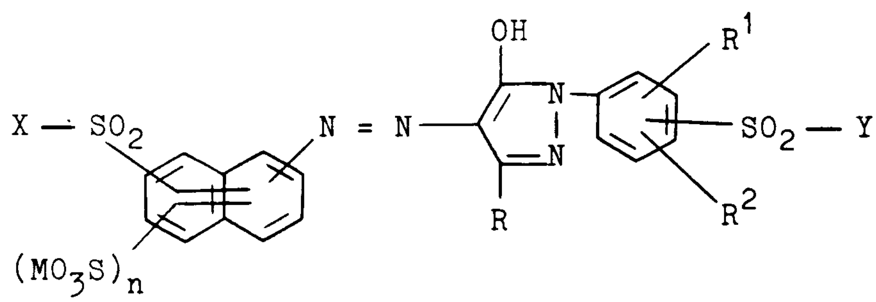

(1)

in welcher bedeuten:

M ist ein Wasserstoffatom oder ein Alkalimetall;
n ist die Zahl Null oder 1;
$R^1$ ist Wasserstoff, Methyl, Ethyl, Methoxy, Ethoxy, Chlor, Brom, Carboxy oder Sulfo;
$R^2$ ist Wasserstoff, Methyl, Ethyl, Methoxy, Ethoxy, Chlor oder Brom;
R ist Carboxy oder Carbalkoxy von 2 bis 5 C-Atomen;
X ist eine $\beta$-Thiosulfatoethyl-Gruppe oder eine $\beta$-Sulfatoethyl-Gruppe oder

X ist die Vinylgruppe, wobei jedoch n zwingend für die Zahl 1 steht;
Y ist eine β-Thiosulfatoethyl-Gruppe oder eine β-Sulfatoethyl-Gruppe oder
Y ist die Vinylgruppe, wobei jedoch n zwingend für die Zahl 1 steht.

**2.** Verbindung nach Anspruch 1, dadurch gekennzeichnet, daß X für die β-Sulfatoethyl-Gruppe steht.

**3.** Verbindung nach Anspruch 1 oder 2, dadurch gekennzeichnet, daß Y für die β-Sulfatoethyl-Gruppe steht.

**4.** Verbindung nach mindestens einem der Ansprüche 1 bis 3, dadurch gekennzeichnet, daß $R^1$ ein Wasserstoffatom ist.

**5.** Verbindung nach mindestens einem der Ansprüche 1 bis 3, dadurch gekennzeichnet, daß $R^1$ und $R^2$ beide ein Wasserstoffatom sind.

**6.** Verbindung nach Anspruch 1 entsprechend der allgemeinen Formel (1a)

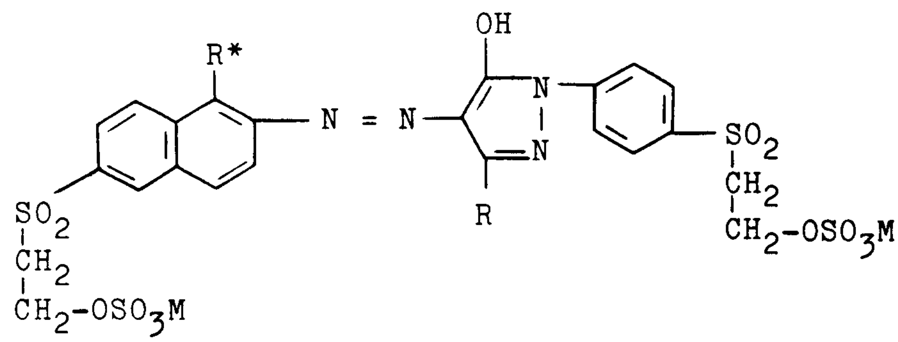

(1a)

in welcher R* ein Wasserstoffatom oder eine Sulfogruppe ist, R eine Carboxygruppe oder Carbalkoxygruppe von 2 bis 5 C-Atomen bedeutet und M für ein Wasserstoffatom oder ein Alkalimetall steht.

**7.** Verbindung nach Anspruch 6, dadurch gekennzeichnet, daß R die Carbethoxygruppe und R* eine Sulfogruppe ist.

**8.** Verbindung nach Anspruch 6, dadurch gekennzeichnet, daß R eine Carboxygruppe und R* ein Wasserstoffatom ist.

**9.** Verfahren zur Herstellung einer in Anspruch 1 genannten und definierten Verbindung der allgemeinen Formel (1), dadurch gekennzeichnet, daß man ein Diazoniumsalz einer aromatischen Aminoverbindung entsprechend der allgemeinen Formel (2)

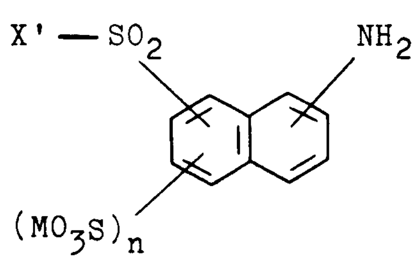

(2)

in welcher M und n die in Anspruch 1 genannten Bedeutungen haben und X′ eine der Bedeutungen von X besitzt oder für eine β-Hydroxyethyl-Gruppe steht, mit einer Verbindung entsprechend der allgemeinen Formel (3)

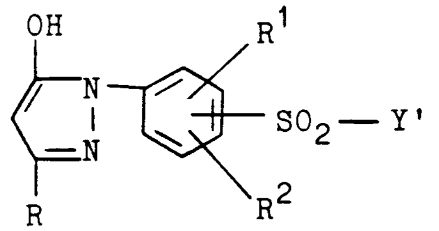

(3)

in welcher R, $R^1$ und $R^2$ die in Anspruch 1 genannten Bedeutungen haben und $Y'$ eine der Bedeutungen von Y besitzt oder für eine $\beta$-Hydroxyethyl-Gruppe steht, kuppelt und im Falle, daß $X'$ oder $Y'$ oder beide eine $\beta$-Hydroxyethyl-Gruppe bedeuten, in der erhaltenen Monoazoverbindung die $\beta$-Hydroxyethyl-Gruppe(n) in die $\beta$-Sulfatoethyl-Gruppe(n) mittels eines Sulfatisierungsmittels überführt.

**10.** Verwendung einer Verbindung von mindestens einem der Ansprüche 1 bis 8, zum Färben (einschließlich Bedrucken) von hydroxy- und/oder carbonamidgruppenhaltigem Material, insbesondere Fasermaterial.

**11.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme und/oder mittels eines säurebindenden Mittels fixiert, dadurch gekennzeichnet, daß man als Farbstoff eine Verbindung von mindestens einem der Ansprüche 1 bis 8 einsetzt.

## Claims

**1.** A water-soluble monoazo compound according to a formula (1)

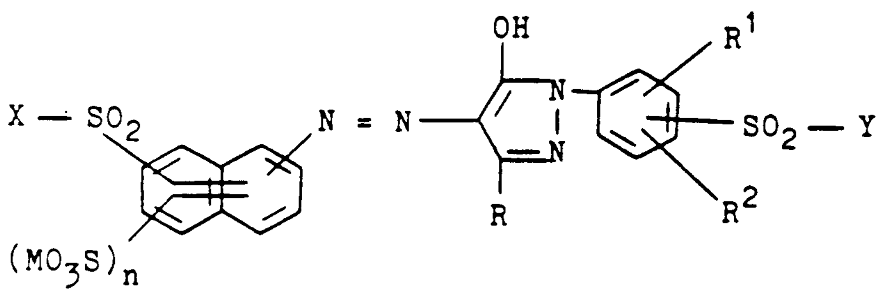

(1)

in which the symbols have the following meanings:

| | |
|---|---|
| M | is a hydrogen atom or an alkali metal; |
| n | is the number zero or 1; |
| $R^1$ | is hydrogen, methyl, ethyl, methoxy, ethoxy, chlorine, bromine, carboxyl or sulfo; |
| $R^2$ | is hydrogen, methyl, ethyl, methoxy, ethoxy, chlorine or bromine; |
| R | is carboxyl or carbalkoxy having 2 to 5 carbon atoms; |
| X | is a $\beta$-thiosulfatoethyl group or a $\beta$-sulfatoethyl group or |
| X | is the vinyl group, in which case, however, n must be the number 1; |
| Y | is a $\beta$-thiosulfatoethyl group or a $\beta$-sulfatoethyl group or |
| Y | is the vinyl group, in which case, however, n must be the number 1. |

**2.** The compound as claimed in claim 1, wherein X is the $\beta$-sulfatoethyl group.

**3.** The compound as claimed in claim 1 or 2, wherein Y is the $\beta$-sulfatoethyl group.

**4.** The compound as claimed in at least one of claims 1 to 3, wherein $R^1$ is a hydrogen atom.

**5.** The compound as claimed in at least one of claims 1 to 3, wherein both $R^1$ and $R^2$ are a hydrogen atom.

**6.** The compound as claimed in claim 1 according to the formula (1a)

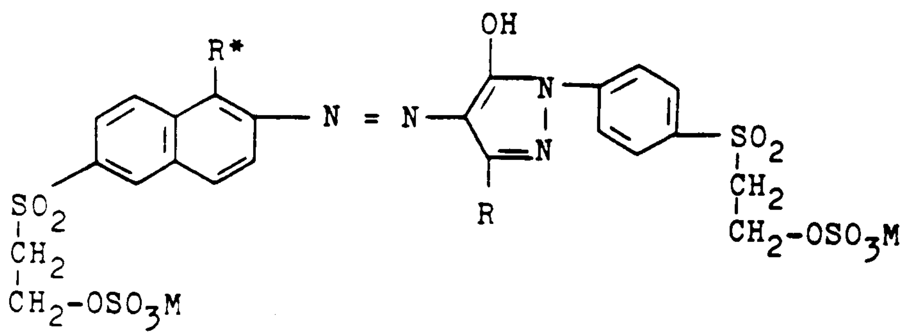

(1a)

in which R* is a hydrogen atom or a sulfo group, R is a carboxyl group or a carbalkoxy group having 2 to 5 carbon atoms and M is a hydrogen atom or an alkali metal.

**7.** The compound as claimed in claim 6, wherein R is the carbethoxy group and R* is a sulfo group.

**8.** The compound as claimed in claim 6, wherein R is a carboxyl group and R* is a hydrogen atom.

**9.** A process for preparing a compound of the formula (1) mentioned and defined in claim 1, wherein a diazonium salt of an aromatic amino compound according to the formula (2)

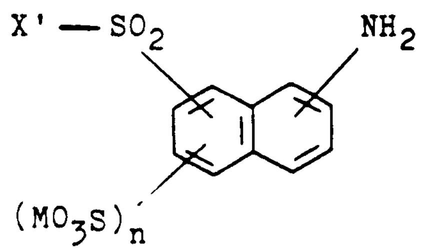

(2)

in which M and n have the meanings mentioned in claim 1 and X' has one of the meanings for X or is a β-hydroxyethyl group is coupled with a compound according to the formula (3)

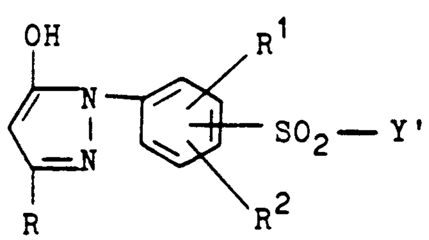

(3)

in which R, R' and $R^2$ have the meanings mentioned in claim 1 and Y' has one of the meanings for Y or is a β-hydroxyethyl group, and, in the case where X' or Y' or both are a β-hydroxyethyl group the β-hydroxy-ethyl group(s) in the resulting monoazo compound is (are) converted to the β-sulfatoethyl group(s) by means of a sulfating agent.

**10.** The use of a compound of at least one of claims 1 to 8, for dyeing (including printing) hydroxyl- and/or carboxamido-containing material, in particular fiber material.

**11.** A process for dyeing (including printing) hydroxyl- and/or carboxamido-containing material, in particular fiber material, in which a dyestuff is applied to the material and fixed by means of heat and/or by

means of an acid-binding agent, wherein the dyestuff used is a compound of at least one of claims 1 to 8.

**Revendications**

1. Composé monoazoïque hydrosoluble, répondant à une formule générale (1)

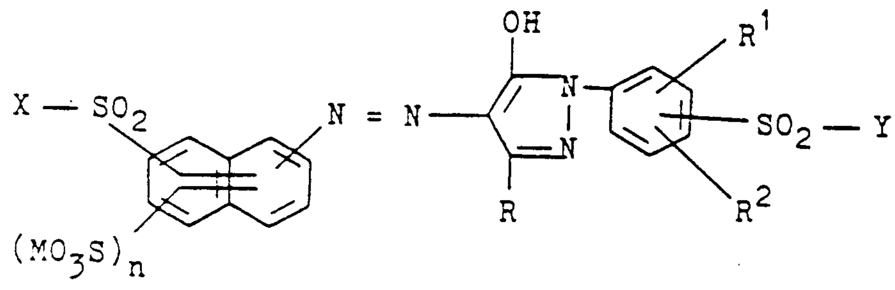

(1)

dans laquelle :

M représente un atome d'hydrogène ou un métal alcalin;
n est un nombre nul ou valant 1;
$R^1$ représente un atome d'hydrogène ou un groupe méthyle, éthyle, méthoxy, éthoxy, chloro, bromo, carboxy ou sulfo;
$R^2$ représente un atome d'hydrogène, un groupe méthyle, éthyle, méthoxy, éthoxy, chloro ou bromo,
R représente un groupe carboxy ou carbalcoxy ayant 2 à 5 atomes de carbone;
X représente un groupe β-thiosulfatoéthyle ou un groupe β-sulfatoéthyle, ou bien ,
X représente le groupe vinyle, mais dans ce cas n doit obligatoirement représenter le nombre 1;
Y représente un groupe β-thiosulfatoéthyle ou un groupe β-sulfatoéthyle, ou bien,
Y représente le groupe vinyle, mais dans ce cas n doit obligatoirement représenter le nombre 1.

2. Composé selon la revendication 1, caractérisé en ce que X représente le groupe β-sulfatoéthyle.

3. Composé selon la revendication 1 ou 2, caractérisé en ce que Y représente le groupe β-sulfatoéthyle.

4. Composé selon l'une au moins des revendications 1 à 3 caractérisé en ce que $R^1$ représente un atome d'hydrogène .

5. Composé selon l'une au moins des revendications 1 à 3, caractérisé en ce chacun des symboles $R^1$ et $R^2$ représente un atome d'hydrogène.

6. Composé selon la revendication 1, répondant à la formule générale (1a)

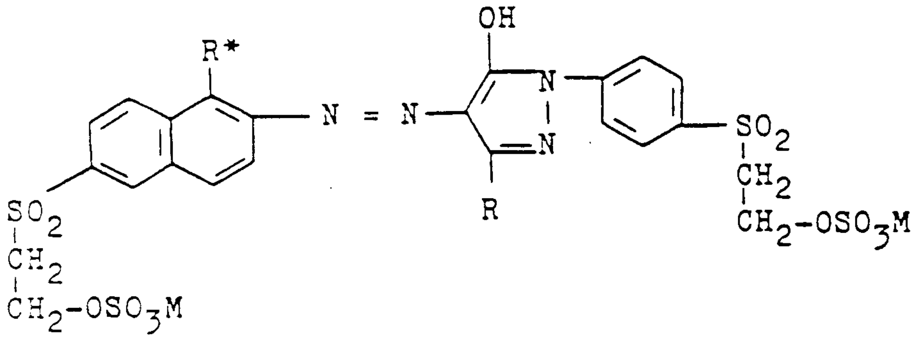

(1a)

dans laquelle $R^*$ représente un atome d'hydrogène ou un groupe sulfo; R représente un groupe

carboxy ou un groupe carbalcoxy ayant 2 à 5 atomes de carbone, et M représente un atome d'hydrogène ou un atome de métal alcalin.

**7.** Composé selon la revendication 6, caractérisée en ce que R représente le groupe carbéthoxy et $R^*$ représente un groupe sulfo.

**8.** Composé selon la revendication 6, caractérisé en ce que R représente un groupe carboxy et $R^*$ un atome d'hydrogène.

**9.** Procédé pour préparer un composé cité et défini à la revendication 1, de formule générale (1), procédé caractérisé en ce qu'on copule un sel de diazonium dérivant d'une amine aromatique répondant à la formule générale (2)

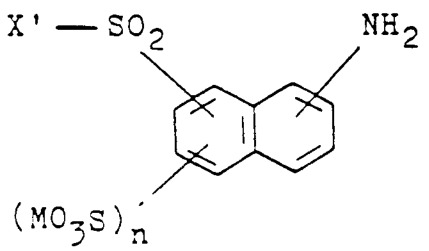

(2)

(dans laquelle M et n ont les sens indiqués à la revendication 1; et X' a l'un des sens de X ou représente un groupe $\beta$-hydroxyéthyle) avec un composé répondant à la formule (3)

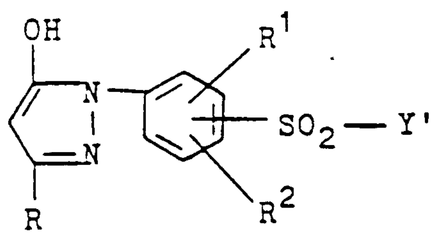

(3)

(dans laquelle R, $R^1$ et $R^2$ ont les sens cités à la revendication 1; Y' a l'un des sens de Y ou représente un groupe $\beta$-hydroxyéthyle) et, si X' ou Y, ou les deux, représente(nt) un groupe $\beta$-hydroxyéthyle, on transforme dans le composé monoazoïque ainsi obtenu le ou les groupes $\beta$-hydroxyéthyle, à l'aide d'un agent de sulfatation, en le ou les groupes $\beta$-sulfatoéthyle .

**10.** Utilisation d'un composé selon l'une au moins des revendications 1 à 8 pour teindre (ce qui comprend l'impression) une matière, notamment une matière fibreuse, contenant des groupes hydroxy et/ou carboxamide (s).

**11.** Procédé pour teindre (ce qui comprend l'impression) une matière, notamment une matière fibreuse, contenant des groupes hydroxy et/ou carboxamides, procédé selon lequel on applique un colorant sur la matière et on l'y fixe à l'aide de la chaleur ou à l'aide d'un agent de fixation des acides, procédé caractérisé en ce qu'on utilise comme colorant un composé selon l'une au moins des revendications 1 à 8.